# EUROPÄISCHE PATENTANMELDUNG

(11) **EP 1 324 193 A1**
(43) Veröffentlichungstag der Anmeldung: **02.07.2003**
(21) Anmeldenummer: 01810574.2
(22) Anmeldetag: 14.06.2001
(51) Int. Cl.: G06F 9/44

(54) **Integrationssystem und Verfahren zur konsistenten Modellerstellung**

(71) Anmelder: ABB RESEARCH LTD., 8050 Zürich (CH)
(72) Erfinder: Naedele, Martin, 8048 Zürich (CH); Preiss, Otto, 5079 Zeihen (CH); Eschermann, Maren, 5417 Untersiggenthal (CH)
(74) Vertreter: ABB Patent Attorneys

(57) **Zusammenfassung**

Die Erfindung ist gerichtet auf ein Integrationssystem zur konsistenten Daten-Modellerstellung in mehreren Applikationen (1, 2, 3), mit einer Wrapper-Komponente (4, 5, 6) für jede zu integrierende Applikation (1, 2, 3) zum Konvertieren applikations-spezifischer Benachrichtigungen und/oder Datenstrukturen eines applikations-spezifischen Daten-Modells in vom Integrationssystem verwendete generische Benachrichtigungen und umgekehrt und zum Weiterleiten von Benachrichtigungen; und einem zentralen Benachrichtigungs-Distibutionssystem (7) zum Empfangen und Versenden vom generischen Benachrichtigungen von und zu den Wrapper-Komponenten (4, 5,6) des Integrationssystems.

## Beschreibung

Die vorliegende Erfindung betrifft ein System zur Integration von Applikationen, beispielsweise Modellierungsapplikationen zur gemeinsamen Bearbeitung von Modellen sowie entsprechende Verfahren.

### Stand der Technik

Ein aktueller Trend bei der Systemkonstruktion ist das sogenannte Multimodellieren, das heißt die Repräsentation eines Systems in der Form von verschiedenen orthogonalen Modellen, welche unterschiedliche Sichten auf das System repräsentieren. Als Beispiel können hier die verschiedenen Ansichten der "Unified Modelling Language (UML)" in Software-Entwicklungswerkzeugen wie "Rational Rose™" genannt werden. Ein weiterer Trend, der ebenfalls die Entwicklung von Modellierungs- und Konstruktionswerkzeugen beeinflußt, ist die Verwendung kommerziell gehandelter Applikationen ("Commercial of the Shelf", COTS), also von Universalprogrammen als Teile einer Anwendung für einen bestimmten Einsatzzweck und ein bestimmtes Anwendungsgebiet, wie beispielsweise Unterstations-Automatisierungskonstruktion. Diese beiden Trends stehen im Widerspruch zueinander, da sie die enge Zusammenarbeit von Programmen beziehungsweise Subsystemen erfordern, die jedoch unabhängig voneinander und ohne jegliche Planung für ihre Kooperation entwickelt worden sind. Im Stand der Technik sind verschiedene Ansätze bekannt, mehrere Standardprogramme miteinander zu koppeln:
- Verschiedene Anwendungsprogramme können Datenformate anderer Werkzeuge bearbeiten. So ist beispielsweise das Programm "Rational Rose" in der Lage, Visual C++ Quelltexte zu lesen und zu schreiben.
- Derzeitige Automatisierungssystemkonstruktionswerkzeuge sind häufig wechselseitig in der Lage, die jeweiligen Daten zu lesen.
- Einige Anwendungsprogramme verwenden gemeinsame Datenaustauschformate wie beispielsweise XML oder XMI, um den Konversionsaufwand bei der Bearbeitung der jeweils anderen persistent gespeicherten Daten zu verringern.
- Anwendungsprogramme können Dokumente anderer Anwendungen in ihre eigenen Dokumente einbetten, beispielsweise im Rahmen des "Object Linking and Embedding (OLE)" der Firma Microsoft, wie der Einbettung einer "Excel"-Tabelle in ein "Word"-Dokument. Hierbei handelt es sich um eine "lebende" Einbettung in dem Sinne, daß sich externe Modifikationen an dem eingebetteten Objekt auch in dem zusammengesetzten Dokument wiederfinden, aber daß alle Assoziationen zwischen zusammengesetztem Dokument und eingebettetem Objekt sich lediglich auf die räumliche Anordnung in dem zusammengesetzten Dokument stützen.
- Ein Anwendungsprogramm kann ein anderes Programm direkt manipulieren, indem es auf die Anwendungsprogrammschnittstelle der manipulierten Anwendung zugreift. Dieser Mechanismus erlaubt eine enge Integration einer Anwendung mit einer anderen, erfordert allerdings eine Master-Slave-Architektur.

Die oben vorgestellten Ansätze leiden unter einem oder mehrerer der folgenden Probleme.
- Die Integration von n-Werkzeugen erfordert (n-1)*n/2 Datenaustauschmechanismen.
- Die Kopplung basiert stets auf dem Austausch von Daten nach dem Ereignis. Keine weitere Applikation kann direkt in der Erzeugung von Daten in der ersten Applikation partizipieren, beispielsweise durch Verhindern dieser Erzeugung oder durch das Hinzufügen zusätzlicher Daten.
- Es gibt keinen Ansatz, mit dem eine Applikation ein auf jedes Ereignis bezogenes "feinkörniges Kontrollrecht" (beispielsweise Vetorecht) Kommandos gegenüber hat, die in einer anderen Anwendung ausgeführt werden.
- Die Anwendungsprogramme sind in ihrem Code fest gekoppelt. Eine Applikation muß die spezielle Anwendungsprogrammschnittstelle der anderen Applikation kennen, die dann nicht gegen eine andere Standardanwendung ausgetauscht werden kann.
- Es ist keine Einrichtung für die automatische Konversion der Bedeutung einer bestimmten Aktion innerhalb einer Anwendung in die entsprechende Bedeutung einer anderen Applikation, also der sogenannten semantischen Übersetzung, vorgesehen. Anderenfalls könnte beispielsweise das Hinzufügen eines Knotens zu einer Zeichnung gleichzeitig einen Eintrag in eine Teilelistetabelle bewirken.
- Schließlich können Repräsentationen identischer Entitäten in verschiedenen Anwendungsprogrammen beziehungsweise Sichten nicht durch gemeinsame Identifikatoren miteinander verknüpft beziehungsweise aufeinander bezogen werden.

Die im Stand der Technik bekannten Ansätze zur Verknüpfung von Standardanwendungen sind daher insgesamt unbefriedigend und mit mehr oder minder großen Nachteilen behaftet. Es ist daher die Aufgabe der vorliegenden Erfindung, Mittel bereitzustellen, die eine weitgehende Integration verschiedener Standardapplikationen zum Erstellen von gemeinsam verwalteten Daten bereitstellt. Diese Aufgabe wird gelöst durch Bereitstellung des Integrationssystems zur konsistenten Datenmodellerstellung gemäß dem unabhängigen Patentanspruch 1 sowie das Verfahren zur konsistenten Datenmodellerstellung gemäß dem unabhängigen Patentanspruch 18. Weitere vorteilhafte Aspekte, Details und Ausführungsformen ergeben sich aus den abhängigen Patentansprüchen, der Beschreibung und den beigefügten Zeichnungen.

Der Erfindung liegt die Idee zugrunde, jede der zu integrierenden Standardapplikationen in Wrapper-Komponenten zu kapseln, welche jeweils spezifisch an die Anwendung angepaßt sind und weitestgehende Manipulationen des von der Anmeldung betreuten Daten-Modells erlauben, und die Interaktion der einzelnen Anwendungsprogrammme über diese Wrapper-Komponenten zu bewerkstelligen.

Daher ist die Erfindung zunächst gerichtet auf ein Integrationssystem zur konsistenten Daten-Modellerstellung in mehreren Applikationen mit
- einer Wrapper-Komponenten für jede zu integrierende Applikation zum Konvertieren applikationsspezifischer Benachrichtigungen und/oder Datenstrukturen eines applikationsspezifischen Daten-Modells in vom Integrationssystem verwendete generische Benachrichtigungen und umgekehrt und zum Weiterleiten von Benachrichtigungen; und
- einem zentralen Benachrichtigungs-Distributionssystem zum Empfangen und Versenden von generischen Benachrichtigungen von und zu den Wrapper-Komponenten des Integrationssystems.

Unter einer Applikation ist hierbei eine beliebige Anwendungssoftware zu verstehen, welche in der Lage ist Daten-Modelle zu erzeugen zum Modifizieren und zum Verwalten. Ein Daten-Modell ist hierbei jegliche Kollektion von Datenobjekten, die in Beziehungen zueinander stehen können. Solche Daten-Modelle können Datenbanken im weitesten Sinne oder Verwaltungsdaten in heterogenen Netzwerken sein. Das möglicherweise wichtigste Anwendungsgebiet von Daten-Modellen liegt jedoch auf dem Gebiet der Modellierung. Ein Modell im klassischen Sinne ist ein System von in Software gebildeten Objekten mit bestimmten Eigenschaften, die in Beziehungen zueinander stehen. Modellobjekte sind als Datenobjekte Repräsentanten für tatsächliche, physikalische oder logische Entitäten, die in vergleichbaren Beziehungen zueinander stehen. Beispiele für Modelle sind Modelle für Computerprogramme, Architekturmodelle, CAD-Modelle und soziologische Modelle. Die Erfindung soll hierbei nicht auf die oben angegebenen Beispiele von Modellen beschrieben sein; sie ist vielmehr anwendbar auf beliebige Arten von Daten-Modellen, beziehungsweise diese Modelle verwaltende Anwendungsprogramme.

Eine applikationsspezifische Benachrichtigung ist jeder programmtechnische Vorgang innerhalb einer Applikation, der zu einer Veränderung des vom Anwendungsprogramm verwalteten Modells führt. Hierzu zählen beispielsweise "Events" im engeren Sinne, synchrone und asynchrone Aufrufe einer Applikations-Prozedur, Interrupts etc. Eine generische Benachrichtigung ist im Sinne der vorliegenden Erfindung demgegenüber die Umsetzung zumindest einer applikationsspezifischen Benachrichtigung oder eines Teils einer applikationsspezifischen Benachrichtigung in eine Form, die von den verschiedenen Komponenten des Integrationssystems verstanden werden kann, da sie in dieser Weise von allen Komponenten des erfindungsgemäßen Integrationssystems verwendet wird. Das zentrale Benachrichtigungs-Distributionssystem implementiert Standardmechnismen für die Benachrichtigungsverteilung und Zwischenspeicherung beziehungsweise das Warteschlangenmanagement. Hierfür können erfindungsgemäß auf dem Markt befindliche Standardtechnologien, wie das Sun-Java-Event-Modell oder das Produkt "Microsoft Message Queue (MSMQ)" der Firma Microsoft verwendet werden.

Außer den generischen Benachrichtigungen, die aus applikationsspezifischen Benachrichtigungen durch Übersetzen erzeugt werden, kann das System noch weitere Typen von generischen Benachrichtigungen verwenden, wie weiter unten noch im Detail erläutert werden wird. Dies sind zum einen generische Benachrichtigungen von dedizierten Komponenten, die keine Wrapper-Komponente benötigen und daher auch keine Übersetzung erfordern, da sie direkt generische Benachrichtigungen erzeugen, und zum anderen Meta-Benachrichtigungen, die sich nicht auf die Daten-Modelle beziehen, sondern in irgendeiner Weise der Steuerung des Integrationssystems dienen.

Die Wrapper-Komponente für eine bestimmte Applikation muß jeweils an diese angepaßt werden; stellt also einen applikationsspezifischen Adapter zwischen Applikation und dem Integrationssystem dar, der die proprietäre Anwendungsprogrammschnittstelle (API) und die interne Datenrepräsentation des jeweils subsidiären Daten-Modellierungssystems isoliert. Je nach Architektur der zu kapselnden Applikation kann die Wrapper-Komponente hierbei recht unterschiedlich strukturiert sein. So kann in einer bevorzugten Ausführungsform die Wrapper-Komponente aufweisen:
- ein Erfassungsmittel zum Erfassen applikationsspezifischer Benachrichtigungen und/oder einer Datenstruktur eines von der Applikation verwalteten Modells; und
- einen Übersetzer zum Umwandeln applikationsspezifischer Benachrichtigungen in generischer Benachrichtigungen des Integrationssystems.

Weiterhin kann zumindest eine der Wrapper-Komponenten aufweisen:
ein Steuermittel zum Senden von applikations-spezifischen Benachrichtigungen an die Applikation zur Modifizierung des Daten-Modells; und
einen Übersetzer zum Umwandeln generischer Benachrichtigungen des Integrationssystems in applikations-spezifische Benachrichtigungen der Applikation, zu der die Wrapper-Komponente gehört.

Wrapper-Komponenten können entweder nur Sender generischer Benachrichtigungen, Empfänger generischer Benachrichtigungen oder sowohl Sender als auch Empfänger sein. Zur Kommunikation mit anderen Komponenten des Integrationssystems wird es daher bevorzugt, daß zumindest eine Wrapper-Komponente aufweist:
- eine Sendeeinheit zum Senden von vom Übersetzer erzeugten generischen Benachrichtigungen an das Benachrichtigungs-Distributionssystem.

Witerhin wird es bevorzugt, daß zumindest eine Wrapper-Komponente aufweist:
- eine Empfangseinheit zum Empfangen generischer Benachrichtigungen vom Benachrichtigungs-Distributionssystem und zur Weiterleitung an den Übersetzer.

Dem Erfassungsmittel der Wrapper-Komponente kommt eine zentrale Rolle für das gesamte System zu, da durch dieses Erfassungsmittel sichergestellt werden muß, daß sämtliche in einer Applikation vorgenommener Änderungen des applikationsspezifischen Daten-Modells dem gesamten Integrationssystem zugeführt werden können, um zu entsprechenden Reaktionen der anderen Komponenten, beispielsweise entsprechenden Änderungen an den anderen applikationsspezifischen Daten-Modellen, führen können.

Sofern die zu kapselnde Applikation über entsprechende Möglichkeiten verfügt, kann das Erfassungsmittel als Abonnent eines applikationsspezifischen Benachrichtigungs-Distributors eingerichtet sein. Viele moderne Programme, z.B. das Produkt MS Visio der Fa. Microsoft, arbeiten mit Benachrichtigungs-Distributionssystemen wie beispielsweise Event-Distributoren, die das Einklinken von Drittanwendungen ermöglicht. Diesen Mechanismus kann sich ein externes Programm zu Nutze machen, um über im Programm erfolgte Benachrichtigungen ebenfalls informiert zu werden.

Bei Programmen, die diese Möglichkeit nicht bieten, kann es beispielsweise möglich sein, das Erfassungsmittel als Programmobjekt zum periodischen Lesen einer temporären Datei der Applikation auszulegen, die zum Auffinden von Veränderungen und zum Ableiten von Ereignissen aus diesen Veränderungen beitragen kann. In diesem Fall kann also das Erfassungsmittel auf eine Datei zugreifen, die von der Applikation in regelmäßigen Abständen als Sicherungsspeicherung vorgenommen wird und die Änderungen am Modell, wenn auch häufig mit einer gewissen Verzögerung, reflektiert. Ereignisse können dann beispielsweise abgleitet werden aus Veränderungen gegenüber einer früheren, vom Erfassungsmittel abgespeicherten Version der temporären Modelldatei.

Die an einem Daten-Modell vorgenommenen Änderungen sollen bei allen oder zumindest einem Teil der anderen Applikationen bzw. bei deren Daten-Modellen nachvollzogen werden, um in möglichst allen Applikationen ein konsistentes Daten-Modell aufrecht zu erhalten. Daher müssen die Benachrichtigungen den Applikationen wiederum zugeführt werden, um die Änderungen entsprechend vornehmen zu können. Zu diesem Zweck sind in der Erfindung Übersetzer zum Übersetzen von generischen Benachrichtigungen in solche der jeweiligen Applikation vorgesehen, sowie Steuermittel, welche aufgrund der applikationsspezifischen Benachrichtigungen die Applikationen jeweils so ansprechen können, wie dies bei der jeweiligen Applikation möglich ist, also beispielsweise durch Zugriff über eine API, Einschleusen von Benachrichtigungen in die Message Queue der Applikation, oder direkte Manipulationen am Daten-Modell (d.h. der entsprechenden Datei), wenn andere Eingriffsmöglichkeiten nicht bestehen.

Auch das Steuermittel muß spezifisch für eine Applikation erstellt sein.

Der Übersetzer kann hierbei derselbe Übersetzer sein, der auch für die Umwandlung vom Erfassungmittel der Wrapper-Komponente kommender applikationsspezifischer Benachrichtigungen zuständig ist, kann jedoch auch ein eigener, weiterer Übersetzer sein. Das Steuermittel wiederum kann seine Informationen (applikationsspezifische Benachrichtigungen) direkt vom Übersetzer erhalten, oder aus einem Koordinations-Daten-Modell (s.u.).

Es kann in vielen Fällen wünschenswert sein, eine Art von Abbildung des in einer Applikation vorhandenen Modells auch in der Wrapper-Komponenten bereitzustellen, beispielsweise, um den Übersetzungsvorgang von applikationsspezifischen in generische Benachrichtigungen zu vereinfachen oder als Referenz zur Verknüpfung von Objekten der Modelle in den verschiedenen Applikationen über gemeinsame Identifikatoren. Es wird daher bevorzugt, daß die Wrapper-Komponente weiterhin aufweist Modellierungsmittel zum Erstellen eines generischen Koordinations-Daten-Modells aus den generischen Ereignissen.

Das Koordinations-Daten-Modell kann hierbei Objekte aufweisen, welchen Objekten des applikationsspezifischen Daten-Modells entsprechen, wobei Beziehungen zwischen den Objekten des Koordinations-Daten-Modells bestehen, welche den Beziehungen zwischen den Objekten des applikationsspezifischen Daten-Modells entsprechen, wobei die Objekte eine generische Identifikationsbezeichnung aufweisen, die bei identischen Objekten der Koordinations-Daten-Modelle aller Wrapper-Komponenten identisch ist.

In vielen Fällen wird es nicht ausreichend sein, wenn das Modellierungsmittel lediglich auf Informationen des Erfassungsmittels über neu erzeugte Benachrichtigungen zugreift, um das Koordinations-Daten-Modell zu erstellen. Wird nämlich in einer Applikation ein Daten-Modell nicht ab initio neu erzeugt, sondern wird ein bereits ein existierendes Daten-Modell in die Applikation geladen, beispielsweise von Festplatte, so verfügt das Modellierungsmittel der Wrapper-Komponente zunächst nicht über Informationen, wie dieses von der Festplatte geladene Daten-Modell aktuell aussieht. Es sind daher zusätzliche Maßnahmen nötig, um bei nicht neu erzeugten Daten-Modellen dennoch ein das Daten-Modell korrekt wiedergebendes Koordinations-Daten-Modell zu erzeugen.

Hierfür sind verschiedene Ansätze möglich. So ist es möglich, das Koordinations-Daten-Modell ebenfalls zu speichern und eine Kontrollfunktion zu implementieren, die sicherstellt, daß keine Veränderungen am applikationsspezifischen Daten-Modell gegenüber der letzten Speicherung des generischen Modells vorgenommen worden sind und beide Daten-Modelle damit konsistent sind. Eine solche Kontrollfunktion kann beispielsweise durch die Verwendung eines Zeitstempels bei den verwendeten Dateien erreicht werden. Eine Alternative ist das Abspeichern eines kompletten Hashs des Koordinations-Daten-Modells beim Beenden des applikationsspezifischen Daten-Modells durch die Applikation.

Auch ist es möglich, unmittelbar auf das applikationsspezifische Daten-Modell zuzugreifen, beispielsweise auf eine auf der Festplatte liegende Datei, sobald diese in die Applikation geladen wird und an Hand der in dieser Datei befindlichen Information diesen aktuellen Zustand des Modells zum Zeitpunkt des Ladens repräsentiert, ein Koordinations-Daten-Modell zu konstruieren. Die generischen Benachrichtigungen dienen der Repräsentation von applikationsspezifischen Benachrichtigungen, die in einer Modellierungsapplikation aufgetreten sind. Um von allen am System beteiligten Komponenten verstanden zu werden, müssen diese generischen Benachrichtigungen als Wortschatz den einzelnen Komponenten mitgegeben werden. Es ist daher vorteilhaft, als gemeinsame Basis einen vorgegebenen Satz von generischen Benachrichtigungen zu definieren, der zur Beschreibung der applikationsspezifischen Benachrichtigungen verwendet wird, und der in Lage ist, einen möglichst großen Anteil aller in den jeweiligen Applikationen vorkommenden Benachrichtigungen abzubilden. Typische, generische Benachrichtigungen, welche im Rahmen der Erfindung definiert werden könnten, sind beispielsweise "Datenobjekt hinzufügen", "Datenobjekt entfernen", "Objekte verbinden", oder "Verbindung löschen".

Es ist die Aufgabe der in den Wrapper-Komponenten implementierten Übersetzer oder sonstigen Funktionen, eine Umsetzung der Benachrichtigungen von applikationsspezifischen in generische und umgekehrt zu bewerkstelligen. Da in vielen Fällen eine 1:1-Abbildung nicht möglich sein wird, kann die dadurch notwendige Übersetzungsarbeit komplexer werden als eine einfache Zuordnung. So kann es notwendig sein, eine applikationsspezifischer Benachrichtigung, für die es kein direktes Äquivalent im Set der generischen Benachrichtigungen gibt, mit Hilfe mehrerer generischer Benachrichtigungen zu emulieren. Umgekehrt kann es notwendig werden, eine generisches Benachrichtigung, die an eine bestimmte Applikation gesandt werden soll, ebenfalls in mehrere applikationsspezifische Benachrichtigungen zu übersetzen, wenn es kein direktes Äquivalent für die zu sendende generische Benachrichtigung gibt.

Ein wichtiger Punkt bei der vorliegenden Erfindung besteht darin, sicherzustellen, daß Änderungen an einem Daten-Modell in einer bestimmten Applikation in anderen Applikationen nachvollzogen werden, sofern die von der Änderung betroffenen Datenobjekte in diesen Applikationen ebenfalls vorkommen. Hierzu müssen Änderungen an Objekten, beziehungsweise an den Beziehungen von Objekten in einem Daten-Modell, in gleicher oder äquivalenter Weise an den Applikationen nachvollzogen werden, in deren Daten-Modellen dieses Objekt beziehungsweise diese Beziehung ebenfalls vorhanden ist oder sind. Hierbei ist es also wichtig, daß die jeweiligen Daten-Objekte korrekt identifiziert werden. Vorzugsweise wird dies erreicht, indem die generischen Benachrichtigungen generische Identifikationsbezeichnungen der Objekte, auf welche sich die Benachrichtigungen beziehen, enthalten. Diese generischen Identifikationsbezeichnungen werden integrationssystemweit eindeutig vergeben und kennzeichnen Daten-Modell übergreifend jeweils bestimmte Objekte. Während also jede Applikation eigenständige Bezeichnungen für die jeweils in ihr vorhandenen Objekte verwendet, gelangen diese Informationen nicht über die Wrapper-Komponente hinaus, sondern werden vielmehr durch systemweit vergebene generische Identifikatoren ersetzt.

Bislang sind lediglich die Wrapper-Komponenten und das Benachrichtigungs-Distributionssystem des erfindungsgemäßen Integrationssystems vorgestellt worden. Es können zu dem System jedoch noch weitere Komponenten hinzutreten, die seine Funktionalität ergänzen beziehungsweise erweitern können. So kann es beispielsweise bevorzugterweise aufweisen zumindest eine Komponente mit Mitteln zum unmittelbaren Generieren und Senden generischer Benachrichtigungen und zum Prozessieren empfangener generischer Benachrichtigungen. Bei diesen speziell programmierten, dedizierten Komponenten sind also keine Wrapper-Komponenten notwendig, da sie unmittelbar in das Integrationssystem integriert und im Hinblick auf dieses ausgelegt sind. Grundsätzlich können diese Komponenten alle verwendeten Typen von Komponenten sein, also beispielsweise auch Applikationen zur Verwaltung von Daten-Modellen.

Eine weitere in das System integrierbare Komponente können Regelprüfer zum Überprüfen generischer Benachrichtigungen hinsichtlich vorgegebener Kriterien sein. Ein solcher Regelprüfer kann eine eigens geschriebene Komponente sein, aber beispielsweise auch ein Expertensystem, das kommerziell erhältlich ist und das mittels einer speziellen Wrapper-Komponente gekapselt wird. Die bislang vorgestellten Komponenten des Integrationssystems sind als passive Komponenten bezeichenbar. Dies bedeutet, daß sie auf eine ihnen übersandtes Benachrichtigung lediglich durch Änderungen des applikationsspezifischen Daten-Modells gemäß den Informationen der Benachrichtigung reagieren, jedoch keine eigenen Benachrichtigungen als unmittelbare Reaktion auf den Eingang einer solchen Benachrichtigung erzeugen. Es kann jedoch auch bevorzugt sein, daß zumindest eine der Wrapper-Komponenten oder/und der dedizierten Komponenten eine aktive Komponente ist mit Mitteln zur Beeinflussung der Weiterleitung der generischen Benachrichtigungen von zentralen Distributionssystemen an die anderen Wrapper-Komponenten. Eine solche Komponente kann beispielsweise nach Empfang einer generischen Benachrichtigung entscheiden, ob dieses generische Ereignis überhaupt, und wenn ja an welche der anderen Komponenten des Systems weitergeschickt werden soll. Es kann dann beispielsweise dem Benachrichtigungs-Distributionssystem eine entsprechendes generisches Benachrichtigung zur Steuerung des Benachrichtigungs-Distributionssystem schicken, daß dieses nicht an andere Komponenten weiterleitet, sondern intern verwendet, um entsprechend der in dieser generischen Benachrichtigung enthaltenen Informationen eine Weiterleitung an keine, bestimmte, oder alle weiteren Komponenten vorzunehmen. In diesem Fall kann eine Zuleitungshierarchie bevorzugt werden, bei der zunächst solche aktiven Komponenten, die im Distributionssystem verteilten Benachrichtigungen enthalten und erst nach Eingang entsprechender Antwortbenachrichtigungen durch die aktiven Komponenten eine mögliche Weiterleitung an andere, passive Komponenten des Integrationssystem vorgenommen wird.

Die zumindest eine Applikation kann ein Modelleditor sein. Ein solches Programm ist in der Lage, Änderungen an einem internen Modell vorzunehmen und dient damit der Konstruktion des Modells.

Die zumindest eine Applikation, vorzugsweise neben einem Modelleditor, kann weiterhin ein Modellbetrachter oder Modellausgabewerkzeug sein. Diese Programme sind lediglich in der Lage, Ereignisse von außen zu empfangen und ein entsprechendes Daten-Modell in einem Ausgabefenster oder auf einem Drucker darzustellen; können jedoch nicht intern zur Änderung des Daten-Modells verwendet werden.

Die Erfindung ist weiterhin gerichtet auf ein Verfahren zur konsistenten Daten-Modellerstellung in mehreren Applikationen. Alles bezüglich des erfindungsgemäßen Integrationssystem Gesagte gilt gleichermaßen auch für das Verfahren, so daß auf das oben Gesagte vollinhaltlich Bezug genommen und verwiesen wird. Im übrigen gilt das für das erfindungsgemäße Verfahren gesagte umgekehrt auch für das Integrationssystem.

Das erfindungsgemäße Verfahren weist folgende Schritte auf:
- Erfassen einer applikationsspezifischen Benachrichtigung einer Applikation;
- Übersetzen der applikationsspezifischen Benachrichtigung in zumindest eine generisches Benachrichtigung;
- Verteilen der zumindest einen generischen Benachrichtigung über ein zentrales Benachrichtigungs-Distributionssystem an zumindest eine weitere Applikation;
- Übersetzen der zumindest einen generischen Benachrichtigung in zumindest eine applikationsspezifisches Benachrichtigung der zumindest einen weiteren Applikation; und
- Senden der zumindest einen applikationsspezifischen Benachrichtigung an die zumindest eine weitere Applikation.

Hierbei kann das Erfassen der applikationsspezifischen Benachrichtigung mittels Entgegennahme von durch einen applikationsspezifischen Benachrichtigungs-Distributor verteilten Benachrichtigungen erfolgen. Bei dieser Ausführungsform des erfindungsgemäßen Verfahrens muß die Applikation, von der die Benachrichtigungen erfaßt werden sollen, über eine Möglichkeit zum externen Einklinken in die Benachrichtigungswarteschlange oder das Benachrichtigungsverteilungssystem der Applikation gestatten.

Bei den Benachrichtigungen handelt es sich um solche, die das applikationsspezifische Daten-Modell verändern. Das Senden der applikationsspezfischen Benachrichtigungen an die weitere Applikation führt dazu, daß deren applikationsspezifisches Daten-Modell entsprechend den Vorgaben aus der Benachrichtigung ebenfalls verändert wird.

Alternativ kann das Erfassen der applikationsspezifischen Benachrichtigung durch periodisches Lesen einer temporären Modelldatei der Applikation und Auffinden von Veränderungen und Ableiten von Benachrichtigungen aus diesen Veränderungen erfolgen.

Das Verteilen der generischen Benachrichtigungen über das zentrale Benachrichtigungs-Distributionssystem kann vorzugsweise folgende Schritte aufweisen:
- Senden der generischen Benachrichtigung an das zentrale Benachrichtigungs-Distributionssystem; und
- Senden der generischen Benachrichtigung an die zumindest eine weitere Applikation.

Das Übersenden der generischen Benachrichtigung an das zentrale Benachrichtigungs-Distributionssystem kann beispielsweise durch den erfindungsgemäßen Wrapper erfolgen, während das Weitersenden durch das zentrale Benachrichtigungs-Distributionssystem eines Integrationssystems erfolgen kann. Bei dieser Ausführungsform handelt es sich um ein einfaches Distributionssystem, bei dem alle generierten generischen Benachrichtigungen grundsätzlich weitergeleitet werden, auch wenn hier natürlich die Möglichkeit besteht, eine Auswahl zu treffen, welche Benachrichtigung an welche weiteren Applikationen geschickt werden sollen.

Um eine Überprüfung der im Integrationssystem distributierten Benachrichtigungen zu ermöglichen, kann alternativ auch das Verteilen des generischen Benachrichtigungen folgende Schritte aufweisen:
- Senden der generischen Benachrichtigung an das zentrale Benachrichtigungs-Distributionssystem;
- Senden der generischen Benachrichtigungen vom Benachrichtigungs-Distributionssystem an zumindest eine aktive Komponente;
- Überprüfen der generischen Benachrichtigung an Hand eines Regelwerks der aktiven Komponente;
- Generieren einer generischen Steuerbenachrichtigung mit Informationen über die weitere Behandlung des empfangenen generischen Ereignisses durch das zentrale Benachrichtigungs-Distributionssystem;
- Senden der generischen Steuererbenachrichtigung an das zentrale Distributionssystem; und
- in Abhängigkeit von der generischen Steuerbenachrichtigung: Behandeln der generischen Benachrichtigung.

Bei dieser Variante wird, wie auch oben in bezug auf das Integrationssystem bereits beschrieben, eine Überprüfung der generischen Benachrichtigungen an Hand eines vorgegebenen Regelwerks, welches in einer der Komponenten implementiert ist, durchgeführt. Da diese Komponenten in der Lage sind nach Prüfung wiederum Benachrichtigung, sogenannte Steuerbenachrichtigungen zu generieren, bezeichnet man sie in der vorliegenden Erfindung als aktive Komponenten. Das genannte Behandeln der generischen Benachrichtigung kann sein ein Senden oder Nichtsenden der generischen Benachrichtigung an andere Applikationen. Es kann auch ein Modifizieren entsprechend einer Vorgabe durch die Steuerbenachrichtigung beinhalten.

Schließlich kann das Behandeln auch ein Senden einer Informationsbenachrichtigung an den Sender der generischen Benachrichtigung beinhalten. Dieser kann auf die Informationsbenachrichtigung entsprechend reagieren, beispielsweise durch Modifikation der übersendeten Benachrichtigung und Neusendung oder durch Unterdrücken des Sendens weiterer Benachrichtigungen zu einem bestimmten Objekt seines Daten-Modells.

Die generische Benachrichtigung kann an alle aktiven Komponenten gleichzeitig gesendet werden. Diese können dann eine Prüfung übernehmen und ihre entsprechenden Steuerbenachrichtigung(en) zurücksenden. Die generische Benachrichtigung kann weiterhin an alle weiteren Applikationen gesendet werden.

### Kurze Beschreibung der Zeichnungen

Figur 1 zeigt in einer schematischen Übersicht den grundsätzlichen Aufbau des erfindungsgemäßen Integrationssystems; und
Figur 2 zeigt die Wechselwirkung zwischen applikationsspezifischem Daten-Modell, generischem Daten-Modell in verschiedenen Anwendungen und den Fluß der Benachrichtigungen.

### Wege zur Ausführung der Erfindung

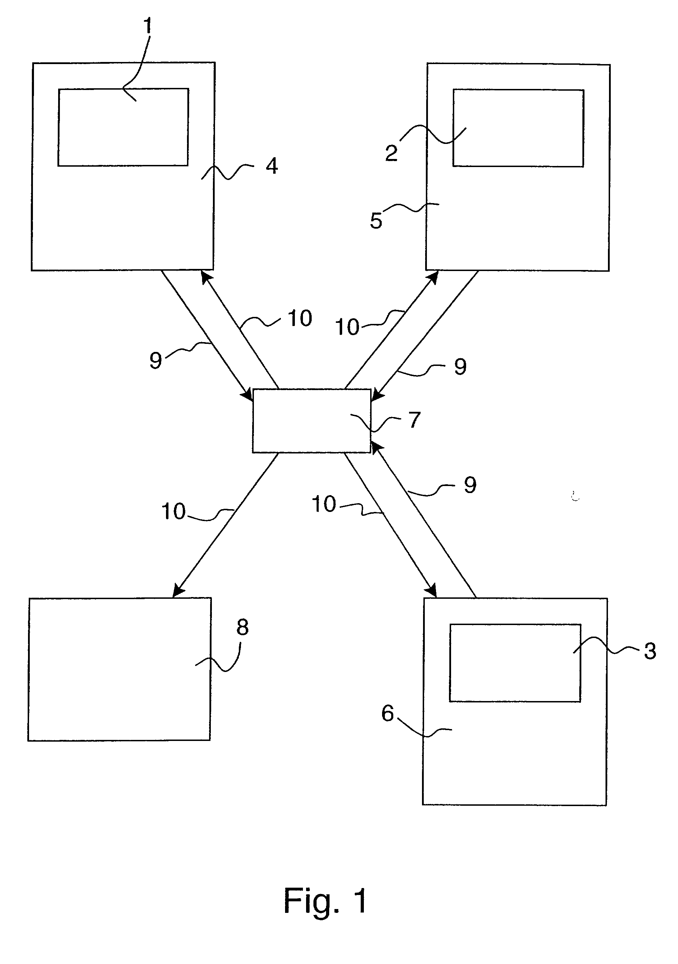

Die Erfindung stellt eine neue Software-Architektur für die Integration von Anwendungen zu einer Multiansicht-Modellierungsanwendung oder anderer Applikationen mit vergleichbaren Daten-Modellen bereit. Jeder der subsidiär integrierten Anwendungen kann ein beliebiges vorgefundenes beziehungsweise käuflich erwerbbares Standardanwendungsprogramm sein. Wie in Figur 1 gezeigt, weist die erfindungsgemäße Architektur zwei Hauptmerkmale auf:
- Jede zu integrierende Applikation 1, 2, 3, z.B. eine Modellierungsapplikation, wird durch einen applikationsspezifischen Adapter, die Wrapper-Komponente 4, 5, 6, gekapselt, der das proprietäre zu integrierende System bezüglich seiner Anwendungsprogrammschnittstelle (API) und seiner internen Datenrepräsentation isoliert.
- Das zweite charakteristische Merkmal der Erfindung besteht darin, daß Änderungen am Daten-Modell einer Applikation 1 an alle anderen Anwendungen 2, 3 propagiert werden durch die Verwendung generischer Benachrichtigungen. Eine Anwendung, die in die Kommunikationsinfrastruktur eingehängt ist, kann nicht nur Änderungen am Daten-Modell vornehmen und über Änderungen, die von anderen Anwendungen initiiert sind, informiert werden, sondern kann auch Änderungen, die von anderen Anwendungen vorgeschlagen sind, widersprechen.

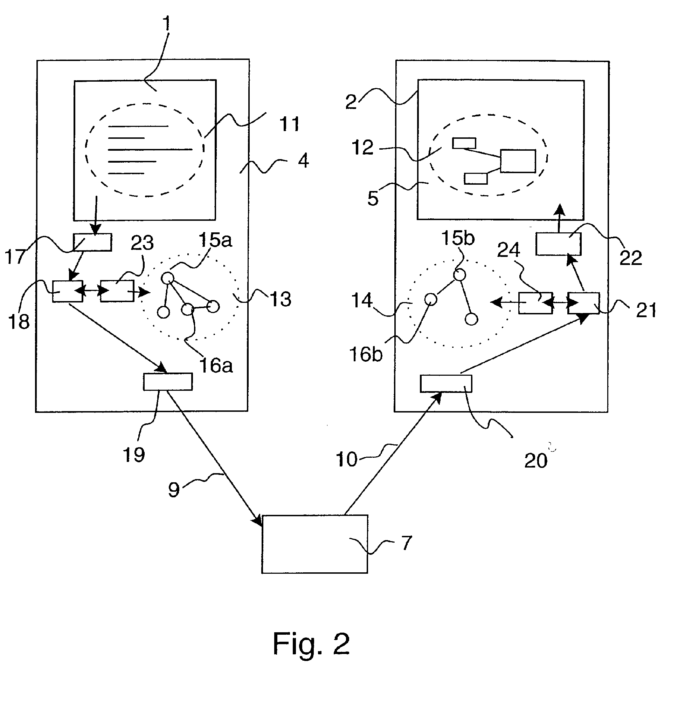

Figuren 1 und 2 zeigen ein solches erfindungsgemäßes Integrationssystem, welches beispielsweise aus zwei Modellierungsanwendungen, nämlich einen Texteditor 1 und einem graphischen Editor 2 besteht, die mittels Wrapper-Komponenten 4 und 5 gekapselt sind. Der Texteditor 1 enthält ein Daten-Modell 11, das eine Textliste der beispielhaft für das Modell verwendeten Objekte und ihre Beziehungen zueinander enthält. Der graphische Editor 2 enthält eine Reihe von Objekten graphischer Natur in seinem Modell 12, die in Beziehung zueinander stehen. Diese können vom graphischen Editor entsprechend auf einem Bildschirm oder sonstigen Ausgabegerät visualisiert werden. Außer den drei hier dargestellten Modellierungsapplikationen 1, 2 und 3 mit ihren Wrappern 4, 5 und 6 weist das erfindungsgemäße Integrationssystem der Fig. 1 einen Benachrichtigungs-Distributor 7 auf, der an ihn gerichtete Benachrichtigungen weiterleitet. Schließlich zeigt Figur 1 eine dezidierte Komponente 8, beziehungsweise einen Regelwerküberprüfer, der, da speziell für das erfindungsgemäße Integrationssystem erstellt, keine Wrapper-Komponente benötigt. Die zwischen den einzelnen Komponenten und dem Benachrichtigungs-Distributionssystem 7 eingezeichneten Pfeile 9 kennzeichnen den Weg, den Benachrichtigungen zum Benachrichtigungs-Distributionssystem 7 nehmen, während Pfeile 10 den Weg von Benachrichtigungen kennzeichnen, die zu den einzelnen Komponenten 4, 5, 6 und 8 geschickt werden. In Figur 2 sind nur die für den beschriebenen Vorgang notwendigen Elemente eingezeichnet. Es versteht sich, daß das in Figur 2 gezeigte System auch die aus Fig. 1 bekannten Komponenten aufweisen kann.

Die erfindungsgemäße Architektur besteht also aus verschiedenen Komponenten:
a) dedizierten Komponenten ohne einen Wrapper-Anteil, und/oder
b) Wrapper-Komponenten/Standardanwendungskombinationen, und
c) einem Benachrichtigungs-Distributionssystem, welche miteinander vermittels sogenannter Benachrichtigungen kommunizieren.

Das Senden einer Benachrichtigung wird durch Aufrufen einer wohlbekannten Methode und Übergabe eines Datenobjekts als Argument realisiert, dessen Struktur sowohl dem Sender als auch dem Empfänger der Benachrichtigung bekannt ist, welche jedoch transparent für die Benachrichtigungsverteilungsstruktur ist.

Benachrichtigungen können unterteilt werden in a) normale modellmanipulationsbezogene Benachrichtigungen und b) Meta-Benachrichtigungen, welche benutzt werden zur Signalisierung zwischen den Komponenten des erfindungsgemäßen Systems. Meta-Benachrichtigungen ändern nicht den persistenten Status des Systems, sondern werden verwendet, um Aspekte der Editierungsitzung zu kontrollieren, wie beispielsweise das Auswählen oder Markieren von Entitäten in mehreren Komponenten gleichzeitig. Wie in Figur 2 durch Pfeile 9, 10 dargestellt, besteht die Architektur beispielsweise aus einem Benachrichtigungssender 19, Benachrichtigungsempfänger 20 und einem Benachrichtigungs-Distributionssystem 7 mit einer oder mehreren Komponenten. Letzteres implementiert Standardmechanismen für die Benachrichtigungsverteilung und das Queueing, wie beispielsweise das Sun-Java-Event Model oder Microsoft Message Queue. Benachrichtigungsempfänger können als aktive und passive Empfänger klassifiziert werden. Passive Empfänger empfangen eine Benachrichtigung und ändern ihren internen Status gemäß der Information, die in der Benachrichtigung enthalten ist. Passive Empfänger können zeitlich entkoppelt werden, indem Warteschlangenmechanismen implementiert werden.

Aktive Empfänger prozessieren die Information, die in der Benachrichtigung enthalten ist und, abhängig davon, notifizieren den Sender, ob diese Benachrichtigung zu anderen Empfängern geschickt werden soll, oder unterdrückt werden soll. Zu diesem Zweck ist der Verteilungsmechanismus zweigeteilt: zuerst wird die Benachrichtigung an alle aktiven Empfänger gesendet und nur falls keiner von diesen widerspricht, wird sie auch an alle passiven Empfänger gesendet. Die erfindungsgemäße Kommunikationsarchitektur ähnelt der des Java-1.1-Ereignismodells; weist jedoch gegenüber diesem wichtige Unterschiede auf. Bei Java wird ein sogenanntes veto-ierbares Änderungsereignis an einen Empfänger nach dem anderen geschickt. Dieses Ereignis enthält den vorgeschlagenen neuen Status und den alten Status. Die Empfänger ändern ihren internen Status entsprechend. Sobald ein Empfänger der Änderung widerspricht, wird ein invertiertes veto-ierbares Änderungsereignis (das heißt neuer Status und alter Status mit vertauschten Positionen) an alle Empfänger gesendet, so daß die Empfänger, welche das Ereignis vor dem Veto empfangen haben, ihren Status wieder auf den Originalstatus zurücksetzen können. Diese Architektur hat verschiedene Probleme: 1) wird angenommen, daß das invertierte Ereignis nicht auf Widerspruch bei einem der Empfänger stößt. Es ist hierbei unklar, was passiert, wenn diese Annahme nicht gültig ist; 2)wird vorausgesetzt, daß alle Ereignisse reversibel sind; 3) ist es schwierig, bei dieser Architektur einen Widerspruch aufzuheben, da ein Aufheben lediglich auf dem ersten vorgekommenen Veto ruhen kann. Als Beispiel wird bei einem Ereignis durch Empfänger 1 widersprochen. Der Sender entscheidet dieses Veto aufzuheben, und das Ereignis nochmals zu senden. Nunmehr muß es jedoch irgendwie markiert sein, so daß Empfänger 1 es ignoriert, jedoch nicht anderen Empfänger. Dann widerspricht Empfänger 2 dem Ereignis. Der Sender muß wieder entscheiden, ob er das Veto von Empfänger 2 aufheben will und falls ja, ein Ereignis aussenden, welches Empfänger 1 und 2 mitteilt, daß sie es ignorieren sollen, usw.

Bei der erfindungsgemäßen Architektur wird die vorgeschlagene Änderung an alle aktiven Empfänger gesendet. Jeder aktive Empfänger entscheidet, ob er der Benachrichtigung widersprechen will, ändert jedoch nicht seinen internen Status. Alle Widersprüche (Vetos) werden gesammelt, und eine Aufhebungsentscheidung wird gefällt. Falls kein Veto aufgetreten ist, beziehungsweise es wiederum aufgehoben worden ist, wird die vorgeschlagene Änderung nun an alle passiven Empfänger gesendet, welche ihren internen Status nunmehr sicher ändern können, da sie wissen, daß kein weiteres Veto auftreten kann. Eine Komponente, die sowohl in der Vetoentscheidung teilnehmen muß als auch ihren Status ändern muß, muß sich beim Gesamtsystem sowohl als aktiver als auch als passiver Empfänger anmelden. Falls kein Widerspruch eingelegt wird, wird die zweite Stufe durch das Benachrichtigungs-Distributionssystem ohne weitere Beteiligung des Originalsenders initiiert.

Die Benachrichtigungen, welche zwischen den verschiedenen Komponenten des erfindungsgemäßen Integrationssystems ausgetauscht werden, sind von einer generischen Form und können zudem anwendungsgebietsspezifische Informationen enthalten. Der eigentliche Übertragungsvorgang der Benachrichtigung kann hierbei unter Zuhilfenahme von solchen Techniken wie Prozeduraufrufen, RPC, dem http-Protokoll, und im XML- oder SOAP-Format erfolgen. Als Benachrichtigungssender oder -Empfänger verwendete Standardkomponenten befinden sich gekapselt in ihren Wrapper-Komponenten, welche mit Übersetzern ausgestattet sind, welche die Events von Standardanwendungsprogrammen spezifischen Formen, beispielsweise dem Ereignis von MSVisio "shape added" in eine generische Form überführen, welche von allen Wrapper-Komponenten, beziehungsweise den Übersetzern verstanden wird. Die Übersetzer sind auch für die semantische Übersetzung einer Benachrichtigung in bezug auf die empfangene Komponente verantwortlich, beispielsweise kann eine generische "Note added"-Benachrichtigung bei einer visuellen Editierungskomponente zur Hinzufügung von irgendeiner graphischen Repräsentation führen, welche eine graphische Ansicht auf das modellierte System repräsentiert, während bei einem Textverarbeitungsdokument ein Text en passant hinzugefügt wird, welcher die Dokumentationsansicht auf das System repräsentiert und in einer Tabellenkalkulation eine Zeile hinzugefügt wird, welche eine Teilelistenansicht des Systems repräsentiert. Die erfindungsgemäße Architektur gestattet unterschiedliche Arten von Komponentenfunktionalität beziehungsweise Komponentenaufgaben:
- Modelleditoren können Sender und passive Empfänger sein;
- Betrachter- und Ausgabewerkzeuge können passive Empfänger sein;
- Import- und Eingabewerkzeuge sind Sender;
- Schiedsprogramme (arbiter) und Regelerzwinger (rule enforcer), beispielsweise durch Veto-Isierung) sind aktive Empfänger.

In Figur 2 ist in einer bevorzugten Ausführungsform ein weiterer wichtiger Aspekt der vorliegenden Erfindung dargestellt, nämlich die Verwendung von Koordinationsmodellen. Die Wrapper-Komponenten 4, 5 können nämlich ein sogenanntes Koordinationsmodell 13, 14 für die Koordination zwischen den verschiedenen integrierten Anwendungen aufweisen. Dieses reflektiert in einer generischen Weise jeweils die zugrundeliegenden Daten-Modelle 11, 12 der jeweils gekapselten Modellierungsapplikationen 1, 2 mit deren Objekten, beziehungsweise Entitäten und der Beziehung zwischen diesen Objekten. Die Verwendung eines Koordinationsmodells 13, 14 für jede der integrierten Modellierungsapplikationen 1, 2 erlaubt Konstruktion und Wiederverwendung sowie ein modellspezifisches Datenverriegeln (data locking) für Multianwenderzugriff. Im vorliegenden Beispiel weisen die Koordinationsmodelle 13 und 14 die Elemente 15a und 15b bzw. 16a und 16b auf, welche jeweils innerhalb des Gesamtmodells identische Objekte kennzeichnen, und die bei den Koordinationsmodellen 13, 14 mit identischen Identifikationsbezeichnungen versehen sind, um so applikationsübergreifend miteinander korreliert werden zu können. Eine innerhalb der Modellierungsapplikation 1, beispielsweise einem Texteditor, vorgenommene Änderung wird vom Erfassungsmittel 17 erkannt und fließt entweder unmittelbar oder über den Übersetzer 18, der die applikationsspezifischen Benachrichtigungen in generische Benachrichtigungen umwandelt, in das Koordinationsmodell 13 ein, welches entsprechend den Änderungen am applikationsspezifischen Daten-Modell 11 ebenfalls geändert wird. In Figur 2 ist dargestellt, daß hierzu Modellierungsmittel 23, 24 verwendet werden können, welche mit den Übersetzern 18, 21 Daten austauschen. Es bestehen aber, wie angegeben, verschiedene Möglichkeiten für die Modellierungsmittel, an Daten zur Modifikation der Koordinations-Daten-Modelle zu gelangen.

Die generische Benachrichtigung wird ebenfalls dem Ausgabemittel 19 zugeleitet, welches diese an das Benachrichtigungs-Distributionssystem 7, beispielsweise über Strecke 9 weiterleitet. Beim Übersetzungsvorgang im Übersetzer 18 ist eine Identifikationsnummer, welche dem Koordinationsmodell 13 entnommen ist, der Benachrichtigung beigegeben worden, um das Objekt, auf das sich diese Benachrichtigung bezieht, eindeutig identifizieren zu können. Das Benachrichtigungs-Distributionssystem 7 leitet die Benachrichtigung über Strecken 10 den Empfängermitteln 20 der Wrapper-Komponenten, beispielsweise der Wrapper-Komponente 5 zu, welche innerhalb der Wrapper-Komponente 5 zu einer entsprechenden Änderung des Koordinationsmodells 14 führt, wobei die generische Identifikationsbezeichnung verwendet wird, um das manipulierte Objekt wieder aufzufinden.

Die Modifikation des Koordinationsmodells 15 kann entweder unmittelbar oder nach Umsetzung über den Übersetzer 21 stattfinden. Das Steuermittel 22 schließlich steuert die entsprechende Änderung am applikationsspezifischen Modell 12 der Modellierungsapplikation 2. Hierbei kann die dafür notwendige Information entweder vom Übersetzer 21 oder auch direkt vom Koordinationsmodell 14 entnommen werden.

Ein Hauptmerkmal der vorgestellten erfindungsgemäßen Architektur besteht darin, daß kein gemeinsames Daten-Modell, welches die verschiedenen Modellansichten der einzelnen Anwendungsprogramme integrieren würde, und keine gemeinsamen Datenspeicherung existiert. Jeder integrierte Modelleditor enthält ein partielles Modell für seine spezielle Sicht und die korrespondierenden Datenspeicher. Zu dem applikationsspezifischen Modell kann ein weiteres Modell hinzutreten, nämlich ein applikationsunabhängiges Koordinationsmodell und eine Referenzstruktur, welche die Topologie zumindest der jeweiligen Sicht reflektiert und die verantwortlich ist für das Korrelieren der Modellentitätsindentifizierungscodes und deren Beziehung zueinander zu applikationsspezifischen Modellelementen.

Figur 2 zeigt beispielhaft zwei Koordinationsmodelle 13 und 14, die jeweils korreliert sind mit den applikationsspezifischen Daten-Modellen 11 beziehungsweise 12. In der Regel wird es sich bei dem Koordinationsmodell ebenfalls um ein partielles Modell handeln, was beispielsweise 1:1 das applikationsspezifische, in der Regel ebenfalls partielle Modell abbilden soll. Referenzen zwischen identischen Entitäten beziehungsweise Objekten, die in den verschiedenen Sichten beziehungsweise Koordinations-Datenmodellen repräsentiert sind, werden mittels identischer Identifikationsattribute hergestellt und aufrechterhalten. So können beispielsweise die Elemente 15a und 15b beziehungsweise 16a und 16b in den beiden in Figur 2 dargestellten Koordinationsmodellen 13 und 14 mit jeweils identischen Identifikationsattributen versehen sein. Nicht alle Elemente eines Modells müssen hierbei in mehreren Koordinationsmodellen enthalten sein. Vielmehr ist es möglich, daß bestimmte Elemente nur in einem Koordinationsmodell enthalten sind, weil diese auch nur in einem applikationsspezifischen Modell auftreten. Andererseits ist genauso möglich, daß in einem Koordinationsmodell mehr Elemente enthalten sind als in dem zugehörigen applikationsspezifischen Modell, beispielsweise aus Gründen der einheitlicheren Verwaltung des Gesamtmodells.

Durch Verwendung des Identifikationsattributs kann eine partielle Information über ein bestimmtes Modellobjekt bzw. Datenobjekt von allen Koordinationsmodellen erhalten und wenn immer notwendig, miteinander kombiniert werden.

Das Konzept des Koordinations-Daten-Modells, häufig als partielles Modell, ist konsistent mit der Modellierung von möglicherweise sogar sehr verschiedenen Ansichten auf das System und ermöglicht zusätzlich das konkurrierende Editieren verschiedener Ansichten durch verschiedene Benutzer, ohne daß es zu Locking-Problemen kommen würde, da für jede Modellentität und jedes Attribut definiert werden kann, daß nur eine Sicht für den Schreibzugriff verantwortlich ist.

Das Koordinationsmodell und Applikations-Wrapper-Komponenten-Konzept wie auch die verschiedenen oben aufgelisteten Funktionalitäten, beziehungsweise Rollen von Standardprogrammen, sind kompatibel mit den meisten relevanten Modellierungsapplikationen. Daher kann jede externe Applikation, welche eine Form von programmierbarem Zugriff (API, Scripting, Macrosprache) ermöglicht, leicht in das erfindungsgemäße Integrationssystem integriert werden. Der einzige dafür notwendige Aufwand ist das Anpassen einer Wrapper-Komponente an die spezifische Programmierschnittstelle, welche das Programm verwendet und an die Semantik des Programms.

Alle Komponenten sind lose gekoppelt. Die einzige Komponente, welche allen Komponenten des Integrationssystems bekannt ist, ist das Benachrichtigungs-Distributionssystem 7, bei dem sich alle Komponenten als Sender und/oder aktive, beziehungsweise passive Empfänger, anmelden. Vermittels des zweistufigen Benachrichtigungs-Distributionsmechanismus ist die gesamte Information im System allen registrierten Komponenten zugänglich, wobei keine durch eventuell vorhandene zusätzliche Information oder spezielle Beziehungen zu anderen Komponenten privilegiert ist. Dies bewirkt eine einfache Erweiterbarkeit und Skalierbarkeit.

### Bezugszeichenliste

- 1: Applikation (Text-Editor)
- 2: Applikation (graphischer Editor)
- 3: Applikation (graphischer Editor 2)
- 4: Wrapper-Komponente
- 5: Wrapper-Komponente
- 6: Wrapper-Komponente
- 7: Benachrichtigungs-Distributionssystem
- 8: Dedizierte Komponente (Regelprüfer)
- 9: Ausgabewege der Wrapper-Komponenten
- 10: Eingabewege der Wrapper-Komponenten
- 11: Daten-Modell (des Text-Editors)
- 12: Daten-Modell (des graphischen Editors)
- 13: Koordinationsmodell
- 14: Koordinationsmodell
- 15a,: 15b Repräsentationen eines Datenobjekts
- 16a,: 16b Repräsentationen eines weitere Datenobjekts
- 17: Erfassungsmittel
- 18: Übersetzer
- 19: Ein-/Ausgabemittel (Benachrichtigungssender)
- 20: Ein-/Ausgabemittel (Benachrichtigungsempfänger)
- 21: Übersetzer
- 22: Steuermittel

## Patentansprüche

1. Integrationssystem zur konsistenten Daten-Modellerstellung in mehreren Applikationen (1, 2, 3), mit
einer Wrapper-Komponente (4, 5, 6) für jede zu integrierende Applikation (1, 2, 3) zum Konvertieren applikations-spezifischer Benachrichtigungen und/oder Datenstrukturen eines applikations-spezifischen Daten-Modells (11, 12) in vom Integrationssystem verwendete generische Benachrichtigungen und umgekehrt und zum Weiterleiten von Benachrichtigungen; und
einem zentralen Benachrichtigungs-Distibutionssystem (7) zum Empfangen und Versenden vom generischen Benachrichtigungen von und zu den Wrapper-Komponenten (4, 5,6) des Integrationssystems.

2. Integrationssystem nach Anspruch 1, **dadurch gekennzeichnet, daß** zumindest eine der Wrapper-Komponenten (4, 5,6) aufweist:
ein Erfassungsmittel (17) zum Erfassen applikations-spezifischer Benachrichtigungen und/oder einer Datenstruktur eines von der Applikation verwalteten Daten-Modells (11); und
einen Übersetzer (18) zum Umwandeln applikations-spezifischer Benachrichtigungen in generische Benachrichtigungen des Integrationssystems.

3. Integrationssystem nach Anspruch 1 oder 2, **dadurch gekennzeichnet, daß** zumindest eine der Wrapper-Komponenten (5) aufweist:
ein Steuermittel (22) zum Senden von applikations-spezifischen Benachrichtigungen an die Applikation (2) zur Modifizierung des Daten-Modells; und
einen Übersetzer (21) zum Umwandeln generischer Benachrichtigungen des Integrationssystems in applikations-spezifische Benachrichtigungen der Applikation (2), zu der die Wrapper-Komponente (5) gehört.

4. Integrationssystem nach Anspruch 2 oder 3, **dadurch gekennzeichnet, daß** zumindest eine Wrapper-Komponente (4, 5, 6) aufweist:
eine Sendeeinheit (19) zum Senden von vom Übersetzer (18) erzeugten generischen Benachrichtigungen an das Benachrichtigungs-Distributionssystem (7).

5. Integrationssystem nach einem der Ansprüche 2 bis 4, **dadurch gekennzeichnet, daß** zumindest eine Wrapper-Komponente ($, 5, 6) aufweist:
eine Empfangseinheit (20) zum Empfangen generischer Benachrichtigungen vom Benachrichtigungs-Distributionssystem (7) und zur Weiterleitung an den Übersetzer (21).

6. Integrationssystem nach einem der Ansprüche 2 bis 5, **dadurch gekennzeichnet, daß** das Erfassungsmittel (17) als Abonnent eines applikations-spezifischen Benachrichtigungs-Distributors eingerichtet ist.

7. Integrationssystem nach einem der Ansprüche 2 bis 5, **dadurch gekennzeichnet, daß** das Erfassungsmittel (17) ein Programmobjekt zum periodischen Lesen einer temporären Daten-Modelldatei der Applikation (1), zum Auffinden von Veränderungen und zum Ableiten von Benachrichtigungen aus diesen Veränderungen ist.

8. Integrationssystem nach einem der Ansprüche 1 bis 7, **dadurch gekennzeichnet, daß** es weiterhin aufweist Modellierungsmittel zum Erstellen eines Koordinations-Daten-Modells (13, 14) aus den generischen Benachrichtigungen.

9. Integrationssystem nach Anspruch 8, **dadurch gekennzeichnet, daß** das Koordinations-Modell (13, 14) Objekte (15a, 15b, 16a, 16b) aufweist, welche Objekten des applikationsspezifischen Daten-Modells (11, 12) entsprechen und daß Beziehungen zwischen den Objekten (15a, 15b, 16a, 16b) des Koordinations-Daten-Modells (13, 14) bestehen, welche den Beziehungen zwischen den Objekten des applikations-spezifischen Daten-Modells (11, 12) entsprechen, wobei die Objekte eine generische Identifikations-Bezeichnung aufweisen, die bei identischen Objekten (15a, 15b, bzw. 16a, 16b) der Koordinations-Daten-Modelle (13, 14) aller Wrapper-Komponenten (4, 5) identisch sind.

10. Integrationssystem nach einem der Ansprüche 1 bis 9, **dadurch gekennzeichnet, daß** es über einen vorgegebenen Satz von generischen Benachrichtigungen verfügt, der zur Beschreibung der applikations-spezifischen Benachrichtigungen verwendbar ist.

11. Integrationssystem nach einem der Ansprüche 1 bis 10, **dadurch gekennzeichnet, daß** die generischen Benachrichtigungen enthalten generische Identifikations-Bezeichnungen der Objekte (15a, 15b, 16a, 16b), auf welche sich die Benachrichtigungen beziehen.

12. Integrationssystem nach einem der Ansprüche 1 bis 11, **dadurch gekennzeichnet, daß** es weiterhin aufweist zumindest eine dedizierte Komponente (8) mit Mitteln zum unmittelbaren Generieren zu sendender generischer Benachrichtigungen und zum Prozessieren empfangener generischer Benachrichtigungen, deren Benachrichtigungen ebenfalls vom Benachrichtigungs-Distributionssystem (7) verteilt werden und die vom Benachrichtigungs-Distributionssystem (7) Benachrichtigungen empfangen können.

13. Integrationssystem nach Anspruch 12, **dadurch gekennzeichnet, daß** zumindest eine Komponente ein Regelprüfer (8) zum Überprüfen generischer Benachrichtigungen hinsichtlich vorgegebener Kriterien ist.

14. Integrationssystem nach einem der Ansprüche 1 bis 13, **dadurch gekennzeichnet, daß** zumindest eine der Wrapper-Komponenten (4, 5, 6) oder/und der dedizierten Komponenten (8) eine aktive Komponente ist mit Mitteln zur Beeinflussung der Weiterleitung der generischen Benachrichtigungen vom zentralen Benachrichtigungs-Distributionssystem (7) an die anderen Wrapper-Komponenten (4, 5, 6).

15. Integrationssystem nach einem der Ansprüche 1 bis 14, **dadurch gekennzeichnet, daß** die zumindest eine Applikation (1, 2, 3, 8) ein Modell-Editor ist.

16. Integrationssystem nach einem der Ansprüche 1 bis 15, **dadurch gekennzeichnet, daß** die zumindest eine Applikation (1, 2, 3, 8) ein Modell-Betrachter oder ein Modell-Ausgabewerkzeug ist.

17. Integrationssystem nach einem der Ansprüche 1 bis 16, **dadurch gekennzeichnet, daß** es ein Computerprogrammprodukt ist, dessen Bestandteile zumindest teilweise direkt in den Hauptspeicher einer digitalen Datenverarbeitungsanlage geladen werden können und dessen Programmbestandteile von der Datenverarbeitungsanlage ausgeführt werden können.

18. Verfahren zur konsistenten Daten-Modellerstellung in mehreren Applikationen (1, 2, 3), aufweisend folgende Schritte:
- Erfassen einer applikations-spezifischen Benachrichtigung einer Applikation (1);
- Übersetzen der applikations-spezifischen Benachrichtigung in zumindest eine generische Benachrichtigung;
- Verteilen der generischen Benachrichtigung über ein zentrales Benachrichtigungs-Distributionsystem (7) an zumindest eine weitere Applikation (2, 3);
- Übersetzen der generischen Benachrichtigung in zumindest eine applikations-spezifische Benachrichtigung der zumindest einen weiteren Applikation (2, 3); und
- Senden der zumindest einen applikations-spezifischen Benachrichtigung an die zumindest eine weitere Applikation (2, 3).

19. Verfahren nach Anspruch 18, **dadurch gekennzeichnet, daß** das Erfassen der applikations-spezifischen Benachrichtigung mittels Empfangen von, durch einen applikations-spezifischen Benachrichtigungs-Distributor verteilten Benachrichtigungen erfolgt.

20. Verfahren nach Anspruch 18, **dadurch gekennzeichnet, daß** das Erfassen der applikations-spezifischen Benachrichtigung durch periodischen Lesen einer temporären Modelldatei der Applikation (1), und Auffinden von Veränderungen und Ableiten von Benachrichtigungen aus diesen Veränderungen erfolgt.

21. Verfahren nach einem der Ansprüche 18 bis 20, **dadurch gekennzeichnet, daß** das Verteilen der generischen Benachrichtigung über das zentrale Benachrichtigungs-Distributionsystem (7) folgende Schritte aufweist:
- Senden der generischen Benachrichtigung an das zentrale Benachrichtigungs-Distributionssystem (7); und
- Senden der generischen Benachrichtigung an die zumindest eine weitere Applikation.

22. Verfahren nach einem der Ansprüche 18 bis 20, **dadurch gekennzeichnet, daß** das Verteilen der generischen Benachrichtigung folgende Schritte aufweist:
- Senden der generischen Benachrichtigung an das zentrale Benachrichtigungs-Distributionssystem (7);
- Senden der generischen Benachrichtigung an zumindest eine aktive dedizierte Komponente (8),
- Überprüfen der generischen Benachrichtigungen anhand eines Regelwerks der aktiven dedizierten Komponente (8);
- Generieren einer generischen Steuer-Benachrichtigung mit Informationen über die weitere Behandlung des empfangenen generischen Benachrichtigungen durch das zentrale Benachrichtigungs-Distributionssystem (7);
- Senden der generischen Steuer-Benachrichtigung an das zentrale Benachrichtigungs-Distributionssystem (7); und
in Abhängigkeit von der generischen Steuer-Benachrichtigung, Behandeln der generischen Benachrichtigung.

23. Verfahren nach Anspruch 22, **dadurch gekennzeichnet, daß** das Behandeln der generischen Benachrichtigung ihr Senden oder Nichtsenden an andere Applikationen (1, 2, 3) beinhaltet.

24. Verfahren nach Anspruch 22 oder 23, **dadurch gekennzeichnet, daß** das Behandeln der generischen Benachrichtigung ihr Modifizieren entsprechend einer Vorgabe durch die Steuer-Benachrichtigung beinhaltet.

25. Verfahren nach einem der Ansprüche 22 bis 24, **dadurch gekennzeichnet, daß** das Behandeln ein Senden einer Informations-Benachrichtigung an den Sender der generischen Benachrichtigung beinhaltet.

26. Verfahren nach einem der Ansprüche 22 bis 25, **dadurch gekennzeichnet, daß** die generische Benachrichtigung an alle aktiven dedizierten Komponenten gesendet wird.

27. Verfahren nach einem der Ansprüche 1 bis 26, **dadurch gekennzeichnet, daß** die generische Benachrichtigung an alle weiteren Applikationen gesendet wird.
